**Europäisches Patentamt**

**European Patent Office**

**Office européen des brevets**

(19)

(11) **EP 1 298 425 A2**

(12) **EUROPÄISCHE PATENTANMELDUNG**

(43) Veröffentlichungstag:
02.04.2003 Patentblatt 2003/14

(51) Int Cl.7: **G01M 3/32**

(21) Anmeldenummer: 02021389.8

(22) Anmeldetag: **24.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **28.09.2001 DE 10147906**

(71) Anmelder: **Liebherr-Aerospace Lindenberg GmbH**
**88161 Lindenberg/Allgäu (DE)**

(72) Erfinder:
- **Andrä, Robert**
**88161 Lindenberg (DE)**
- **Dorkel, André**
**88161 Lindenberg (DE)**
- **Sauter, Frank**
**88175 Scheidegg (DE)**

(74) Vertreter: **Laufhütte, Dieter, Dr.-Ing. et al**
**Lorenz-Seidler-Gossel**
**Widenmayerstrasse 23**
**80538 München (DE)**

(54) **Verfahren zur Dichtigkeitsmessung von Wagen, insbesondere Zugwagen, und Vorrichtung zur Durchführung des Messverfahrens**

(57) Die Erfindung betrifft verschiedene Verfahren zur Dichtigkeitsmessung von Wagen, insbesondere Zugwagen, im Betrieb und außerhalb des Betriebes. Über die Dichtigkeitsmessung können Aussagen über die Eignung des spezifischen Wagens hinsichtlich der Druckbeständigkeit im Hochgeschwindigkeitsbetrieb erzielt werden. Gemäß einem Vorschlag wird die Dichtigkeit des Wagens durch Echtzeitmessung der Wagen-dichtigkeit im Betrieb ermittelt. Eine parallele Lösung nutzt eine Frequenzanalyse des Innendruckgradienten und eine dritte Lösung basiert auf dem Aufblasen bzw. Aussaugen eines leeren Zuges bei Stillstand. Die Erfindung betrifft weiterhin Vorrichtungen zur Durchführung der Verfahren.

EP 1 298 425 A2

Printed by Jouve, 75001 PARIS (FR)

**Beschreibung**

Die Erfindung betrifft ein Verfahren zur Dichtigkeitsmessung von Wagen, insbesondere Zugwagen, und Vorrichtungen zur Durchführung des Messverfahrens.

Moderne Zugwagen sind üblicherweise klimatisiert und mit einem Druckschutzsystem ausgestattet. Derartige Druckschutzsysteme haben insbesondere bei Hochgeschwindigkeitszügen einen hohen Stellenwert. Sie verhindern das Auftreten von Druckschwankungen im Zugwageninneren, die insbesondere bei Tunneleinfahrten oder noch stärker bei Begegnung von zwei Hochgeschwindigkeitszügen in einem Tunnel auftreten können. Untersuchungen haben ergeben, dass die Wagendichtigkeit des eingesetzten Zugwagens auf die Druckschutzqualität unmittelbaren Einfluss hat. Da während der Einsatzdauer die Wagenleckage zunimmt, nimmt die Wagendichtigkeit und damit die Druckschutzqualität des einzelnen Wagens über die Zeit ab. Das führt dazu, dass druckfeste Wagen eines Hochgeschwindigkeitszuges nach einer längeren Betriebsdauer ihre Druckfestigkeit zunehmend verlieren. Diese Wagen müssen dann zur erneuten Herstellung der Druckfestigkeitsqualität im Bahnbetriebswerk überholt werden.

Der Hintergrund der vorliegenden Erfindung besteht darin, dass ein Verfahren zur Dichtigkeitsmessung und eine Vorrichtung zur Durchführung dieses Messverfahrens geschaffen werden soll, um aufgrund des gemessenen Dichtigkeitsverlaufs die Druckschutzqualität der eingesetzten Wagen auf hohem Niveau sicher zu stellen.

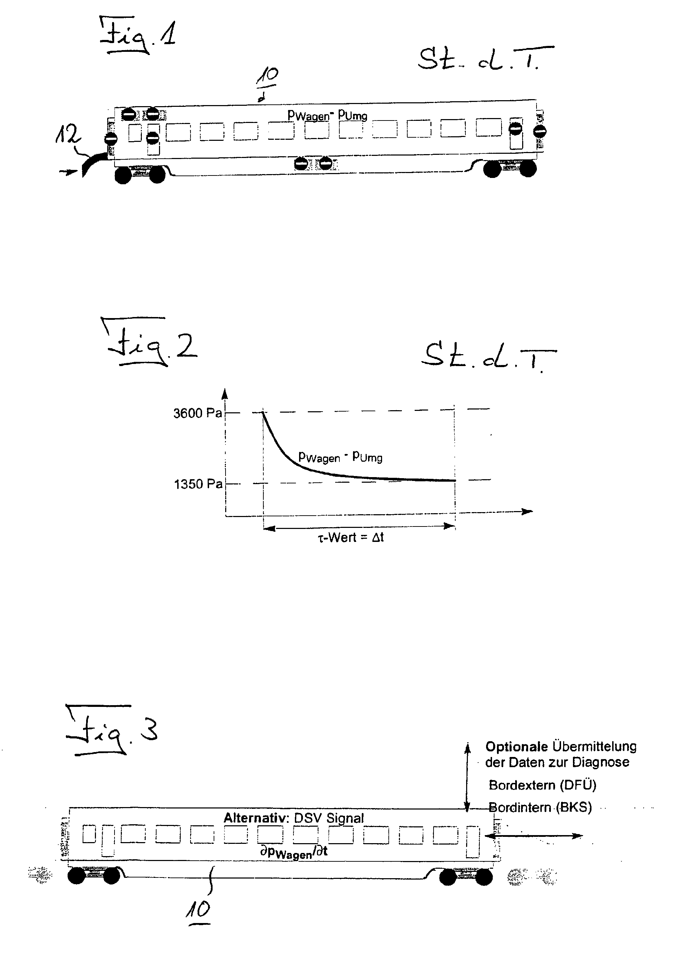

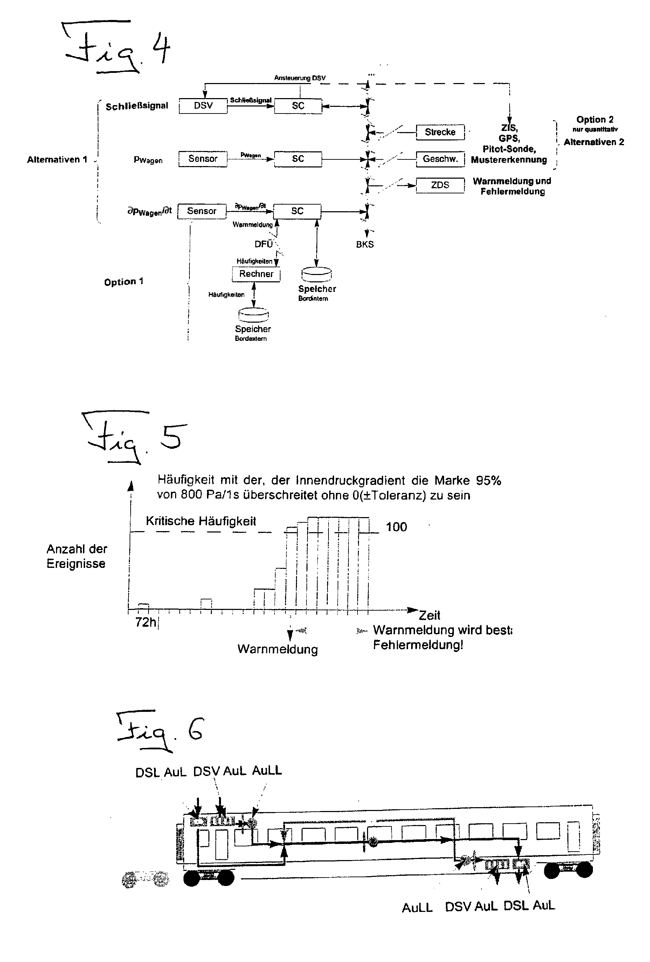

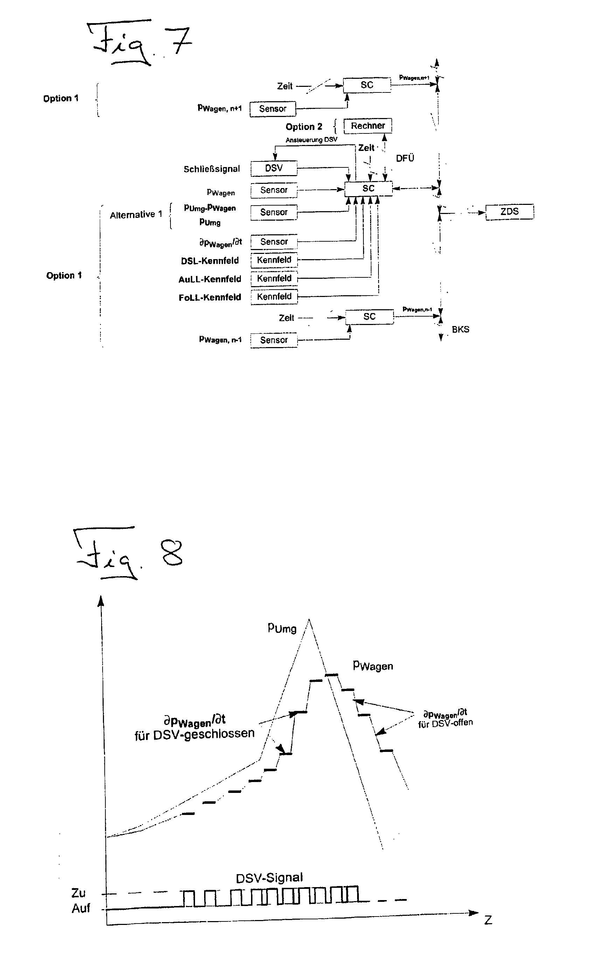

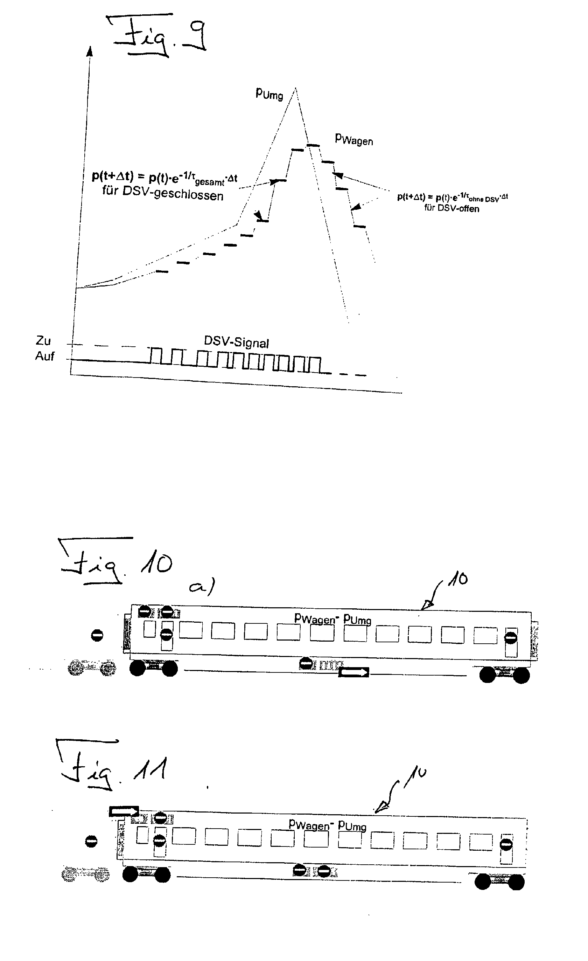

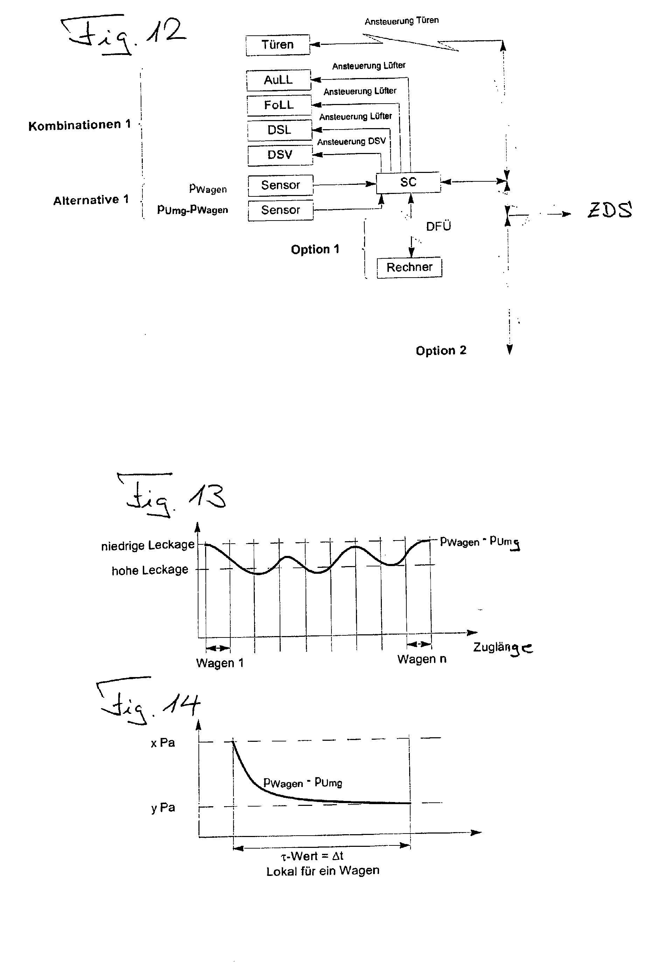

Es gibt bereits Verfahren zur Messung der Wagendichtigkeit. Hier existieren Bahnnormen und Prüfanweisungen, beispielsweise die Prüfanweisung für Druckproben an ICE-Mittelwagen bei der Instandhaltung (derzeitig aktueller Stand: 18. Januar 1993). Das Prinzip der bekannten Wagendichtigkeitsmessung wird anhand der Figuren 1 und 2 im folgenden näher erläutert. Der zu untersuchende Wagen 10 wird abgeschottet, d.h. die Türen und Fenster werden geschlossen, die Übergänge werden abgeschottet, die Außenlufteingänge und die Fortluftaustritte werden versperrt. Dies ist durch die Minuszeichen in der Darstellung des Wagens 10 gezeigt. Der Wagen wird über einen Schlauch 12 auf 3600 Pa Überdruck aufgepumpt. Gemessen die Dauer $\Delta$t des Druckabbaus im Wagen von 3600 Pa auf 1350 Pa, wie dies schematisch in Figur 2 gezeigt ist. Die Dauer $\Delta$t wird auch als $\tau$-Wert bezeichnet, der in Sekunden angegeben wird und ein Maß für die Dichtigkeit des Wagens ist. Nachteilig bei diesem Verfahren ist es, dass der Wagen einzeln aus dem Zugverband entnommen werden muss und insgesamt eine aufwendiger Prüfaufbau notwendig ist. Weiterhin wird die dynamische Wagendichtigkeit nicht unmittelbar ermittelt, d.h. die Dichtigkeit, die sich aufgrund dynamischer Effekte während des Fahrens, beispielsweise Druckluftschwankungen im Tunnel etc. ergeben. Während des Messens ist der Wagen bzw. der Zug natürlich auch dem Betrieb entzogen.

Aufgabe der Erfindung ist es, ein Verfahren zur Dichtigkeitsmessung von Wagen, insbesondere Zugwagen, zu schaffen, bei dem der Wagen nicht aus dem gesamten Wagenverband entnommen werden muss und mit dem eine zuverlässige Messung der Dichtigkeit und somit auch der Druckschutzqualität des Wagens erzielt werden kann.

Die vorgenannte Aufgabe wird erfindungsgemäß durch vier unterschiedliche Verfahren gelöst.

Gemäß eines ersten erfindungsgemäßen Verfahrens zur Dichtigkeitsmessung von Wagen, insbesondere Zugwagen, im Betrieb wird innerhalb des Wagens der Innendruckgradient $\partial_{Pwagen}/\partial t$ gebildet. Entsprechend von vorher festgelegten Grenzwerten des Innendruckgradienten, die in einem Speicher einer Auswerteeinheit abgelegt sind wird nun während des Betriebs des Wagens der gemessene Innendruckgradient mit dem im Speicher der Auswerteeinheit abgelegten Grenzwerten verglichen und es wird über die Zeit ermittelt, wie häufig der gemessene Innendruckgradient die festgelegten Grenzwerte überschreitet. Entsprechend der Häufigkeit der Grenzwertüberschreitung wird die Wagendichtigkeit ermittelt.

Gemäß einer alternativen Lösung zur Dichtigkeitsmessung von Wagen im Betrieb wird das zumindest eine im Wagen integrierte Druckschutzventil zur Dichtigkeitsmessung herangezogen. Gemäß diesem Verfahren wird die Schließfrequenz der Druckschutzventile in Abhängigkeit von der durch den Wagen befahrenen Strecke und der Geschwindigkeit gemessen und mit in einem Speicher einer Auswerteeinheit abgelegten für den dichten Wagen aufgenommen Referenzwerten verglichen. Bei Feststellung einer erhöhten Schließfrequenz der Druckschutzventile gegenüber dem zugehörigen gespeicherten Referenzwert wird festgestellt, dass der Wagen undicht ist.

Bevorzugte Ausgestaltungen der Erfindung ergeben sich aus den sich an die vorgenannten Verfahrensansprüche anschließenden Unteransprüche 3 bis 6.

Erfindungsgemäß ausgestaltete Vorrichtungen zur Durchführung der vorgenannten Verfahren ergeben sich aus den Ansprüchen 7 bis 9.

Demnach kann ein Differenzdrucksensor für den Wageninnendruck gegenüber einem Referenzwert, ein großer Referenzbehälter oder aber ein Differenzdrucksensor mit einem kleinen Referenzbehälter zur direkten Messung des Druckgradienten $\partial_{Pwagen}/\partial t$ vorgesehen sein.

Bei der Messung der Schließfrequenz der Druckschutzventile sind vorzugsweise Endschalter zum Zählen der Schließzyklen in den Druckschutzventilen integriert.

Zur Messung der Fahrgeschwindigkeit können an der Wagenaußenhaut zweiseitige Pitotsonden angeordnet sein, deren eine Seite jeweils über ein Versperrorgan, beispielsweise eine Kugel oder eine Membran, verschließbar ist. Diese Pitotsonden sind also im wesentlichen T-förmig ausgebildet, wobei die sich gegenüberliegenden Schenkel des T einerseits in Fahrtrichtung und andererseits gegen Fahrtrichtung des Wagens verlaufen, so dass die Pitotsonde die Fahrgeschwindigkeit in jeder der möglichen Fahrtrichtungen des Wagens aufnehmen kann. Durch das Versperrorgan wird aufgrund des Staudrucks derjenige Teil der Pitotsonde außer Kraft gesetzt, der in der windabgewandten Seite liegt.

Die eingangs genannte Aufgabe wird auch durch ein Verfahren zur Dichtigkeitsmessung von Wagen in einem Verbund, insbesondere Zugwagen in einem Zug, gelöst, bei dem die Messung des Innendrucks bzw. Außendrucks über mehrere synchronisierte Meßstellen in Längsrichtung des Wagenverbunds verteilt erfolgt, wobei die Messwerte an eine Auswerteeinheit weitergegeben werden. Über die Auswerteeinheit wird der örtliche Druckgradient über die Längsrichtung des Wagenverbundes im Inneren des Wagenverbundes und/oder außerhalb desselben berechnet.

In Anspruch 11, der sich auf den vorgenannten Verfahrensanspruch zurückbezieht wird eine Differentialgleichung zur Ermittlung der exakten Leckage eines Wagen und dessen Dichtigkeit vorgeschlagen, wobei die unterschiedlichen Variablen über Sensoren ermittelt werden. Weitere vorteilhafte Ausgestaltungen des Verfahrens ergeben sich aus den Ansprüchen 12 und 13.

Gemäß Anspruch 14 wird eine Vorrichtung zur Durchführung des vorgenannten Verfahrens geschützt, bei dem über ein Bordkommunikationssystem an einen ausgewählten Wagen der Innendruck aus dessen Nachbarwagen übertragen wird, um den lokalen Innendruckgradienten in Wagenlängsrichtung $\partial_{Pwagen}/\partial s$ zu berechnen.

Gemäß Anspruch 15 wird ein erfindungsgemäßes Verfahren zur Dichtigkeitsmessung von in einem Wagenverbund zusammenhängenden Wagen, insbesondere Zugwagen in einem Zug, bei Stillstand unter Schutz gestellt, bei dem alle Wagen nach außen abgeschottet sind, so dass entweder nur Außenluft eingeblasen oder nur Fortluft ausgesaugt wird, um eine größtmögliche Druckdifferenz zwischen dem Wageninneren und der Außenumgebung zu erzeugen. Anschließend wird der Druckverlauf gemessen und es wird die Zeit bestimmt, in welcher eine vorgegebene Differenz erreicht wird.

Gemäß einer bevorzugten Ausgestaltung der Erfindung wird die Längsleckage eines einzelnen Wagens berücksichtigt. Darüber hinaus können gegebenenfalls die Lüfter- und Ventilkennlinien bei der Auswertung berücksichtigt werden.

Weitere Einzelheiten und Vorteile der Erfindung werden anhand der in den beigefügten Figuren dargestellten Ausführungsbeispielen näher erläutert. Die Figuren 1 und 2 zeigen eine Konfiguration und einen Druckverlauf gemäß dem Stand der Technik. Die Figuren 3 bis 5 beziehen sich auf die ersten beiden Ausführungsvarianten der Erfindung. Die Figuren 6 bis 9 beziehen sich auf eine dritte Ausführungsvariante der vorliegenden Erfindung und die Figuren 10 bis 15 beziehen sich auf eine vierte Ausführungsvariante der Erfindung. In den Figuren 16 bis 21 sind unterschiedliche erfindungsgemäße Ausgestaltungen von Pitotsonden jeweils im Schnitt dargestellt.

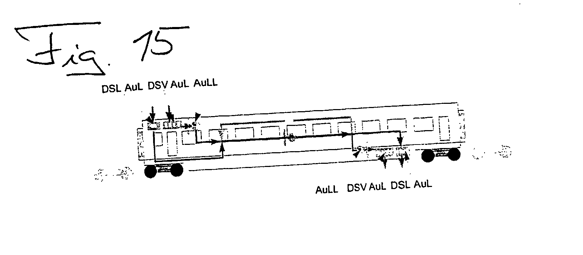

In Figur 3 ist beispielhaft ein Wagen 10 eines hier nicht näher dargestellten Wagenverbandes gezeigt, der beispielsweise ein Wagen eines Hochgeschwindigkeitszuges sein kann. Über die kontinuierliche Messung der Dichtigkeit während des Betriebs kann die Druckschutzqualität während des Betriebs ermittelt werden. Hierzu wird der Innendruckgradient $\partial_{Pwagen}/\partial t$ gemessen. Dieser Innendruckgradient wird über eine Druckschutzauswerteeinheit (DSA) ausgewertet, wobei diese Druckschutzauswerteeinheit im Systemcontroller (SC) integriert ist. Wird ein oder mehrere zu Diagnosezwecken definierter Grenzwert des Druckgradienten überschritten, obwohl der Druckschutz selbst voll funktionsfähig ist, kann daraus geschlossen werden, dass die Wagendichtigkeit nachgelassen hat. Je öfter diese Grenze überschritten wird, umso schlechter ist die Wagendichtigkeit geworden. Somit kann man einen empirischen Zusammenhang zwischen der Häufigkeit der Grenzwertüberschreitung und der Wagendichtigkeit ermitteln.

Alternativ zur Ermittlung des Innendruckgradienten kann die Schließfrequenz der Druckschutzventile, die im Wagen 10 integriert sind, überwacht werden. Es reicht aus festzustellen, dass eine überdurchschnittliche Schließfrequenz der Druckschutzventile (DSV) besteht, um bei bekannter Geschwindigkeit und bekannter Strecke entsprechende Aussagen über die Wagendichtigkeit und damit über die Druckschutzqualität des Wagens treffen zu können. Bei dieser alternativen Ausführungsvariante ist keine zusätzliche Innendruck- oder Innendruckgradientenmessung notwendig.

In Figur 4 ist schematisch wiedergegeben, welche Apparaturen zur Durchführung der erfindungsgemäßen Verfahren notwendig sind. Hier sind ein Differenzdrucksensor für den Wageninnendruck $p_{Wagen}$ gegen die Referenz vorgesehen und ein großer Referenzbehälter. Eine mikroelektronische Druckschutzauswerteeinheit (DSA) wird zumeist in einem dezentralen Klimaregler, der auch Systemcontroller (SC) genannt wird, integriert. Zur Aufnahme der Werte wird ein Massenspeichermedium oder ein kumulatives statistisches Auswerteprogramm vorgesehen. Üblicherweise werden elektrische Signalleitungen und pneumatische Verschlauchungen benötigt. Weiterhin werden die Daten über ein Bordkommunikationssystem (BKS) verteilt. Weiterhin ist ein Zugdiagnosesystem (ZDS) vorhanden. Statt des Differenzdrucksensors und des großen Referenzbehälters kann auch ein Differenzdrucksensor mit extrem kleinem Referenzbehälter vorgesehen sein, um den Druckgradienten $\partial_{Pwagen}/\partial t$ direkt zu messen. Bei Auswertung der Schließzyklen der Druckschutzventile kann zum Zählen der Schließzyklen jeweils ein Endschalter vorgesehen sein.

Wie anhand des Teils in Figur 4, das mit Option 1 bezeichnet ist, dargestellt, können über Datenfernübertragung die entsprechend aufgenommen Daten an einen bordexternen Rechner zur Verarbeitung weitergeführt werden. Die rein qualitativen Aussagen bezüglich der Druckdichtigkeit des Wagens können auch zu einer quantitativen Auswertung (vgl. Option 2 in Figur 4) übermittelt werden. Hierzu sind noch weitere Daten notwendig. Zum einen muss die Fahrgeschwindigkeit ermittelt werden. Das kann grundsätzlich über eine besonders ausgestaltete Pitotsonde an der Wagenaußenhaut des Wagens 10 erfolgen. Die besonders ausgestaltete Pitotsonde wird anhand der Figuren 16 bis 21 später noch erläutert. Alternativ kann die Fahrgeschwindigkeit des Zuges über ein Zuginformationssystem (ZIS) mit Uhrfunktion oder ein Satellitennavigationssystem (GPS) ermittelt werden Weiterhin muss die gefahrene Strecke identifiziert werden, wobei man hier wiederum auf ein Zuginformationssystem (ZIS) oder ein Satellitennavigationssystem (GPS) zurückgreifen kann.

Anhand der Figur 5 wird die Auswertung der Daten erläutert. Hier ist die Anzahl der Ereignisse über der Zeit in einem Diagramm aufgetragen. Das Auswerteverfahren kann, wie zuvor ausgeführt, sowohl eine qualitative, wie auch eine quantitative Aussage über die Wagendichtigkeit ermöglichen.

Einerseits kann durch Trendmonitoring der Druckschutzqualität qualitativ über die Wagendichtigkeit eine Aussage getroffen werden, nämlich die Aussage "Wagen ist dicht" oder die Aussage "Wagen ist undicht".

Sobald der Druckgradient oder eine Funktion dessen, innerhalb eines gewissen Zeitraums, beispielsweise 72 Betriebsstunden, zwar variiert aber immer öfter einen kritischen Wert überschreitet, kann daraus geschlossen werden, dass der Wagen undicht geworden ist (vgl. Figur 5). Anstatt der Gradienten selbst, kann auch die Schließhäufigkeit (Endschaltersignal oder Ansteuerungssignal der Druckschutzventile (DSV)) der Druckschutzventile nach dem gleichen Schema analysiert werden. Die hieraus abgeleiteten Folgerungen entsprechen sich. Somit kann über das Bordkommunikationssystem ein bordeigenes oder über die Datenfernübertragung ein fremdes Diagnosesystem beim Überschreiten einer festgelegten Häufigkeit, beispielsweise 100 Ereignisse, die Meldung an den Zugbetreiber über das Zugdiagnosesystem weiterleiten: "Wagen undicht".

Erst während der Wartung, nach dem Beheben der Wagenundichtigkeit, wird diese Fehlermeldung dann zurückgesetzt.

Andererseits kann aus der ursprünglich rein qualitativen Aussage wiederum durch eine empirische Feldanalyse der Häufigkeit in Kombination mit der Information, welche Strecke gefahren wird und mit welcher Geschwindigkeit der Zug fährt, auch eine quantitative Aussage über die momentane Wagendichtigkeit getroffen werden. Der Fahrzeugbetreiber kann dann selbst entscheiden, ob er den Zug auf einer anderen, unkritischeren Strecke fahren lassen will (ohne Tunnel, niedrigere Geschwindigkeit etc.) oder den Zug zur Instandhaltung aus dem Fahrbetrieb herausnehmen will oder die Meldung einfach ignorieren will. Diese Entscheidungskriterien können auch entweder im Zugdiagnosesystem (ZDS) oder im Systemcontroller (SC) implementiert werden.

Vorteilhaft werden bei dieser Ausführungsvariante der Erfindung die Außendrucksensoren nicht verschmutzt. Es besteht ein nur geringer Aufwand, da nur das Messen des Innendruckgradienten und das Abspeichern der Häufigkeit notwendig ist. Weiterhin wird eine sehr hohe Zuverlässigkeit der Diagnose durch ein direktes Analysieren der Störgröße "Druckgradienten" erzielt. Darüber hinaus wird diese Diagnose während des Fahrgastbetriebes des Wagens durchgeführt, so dass dieser nicht aus dem Zug vereinzelt werden muss und auch nicht still gelegt werden muss.

In den Figuren 16 bis 21 ist jeweils ein besonders ausgestaltetes Pitotrohr 20 gezeigt, das zur Messung des Gesamtdrucks der Luftströmung und damit der Geschwindigkeit des Zuges dient. Das erfindungsgemäße Pitotrohr 20 besteht wie üblich aus einem gegen die Strömung gerichteten, vorn offenen Rohr 22 und weist die Besonderheit auf, dass es auch ein von der Strömung abgewandtes Rohr 24 derart aufweist, das es die Verlängerung des Rohrs 22 bildet. Das von der Strömung abgewandte Rohr 24 wird durch ein Versperrorgan 26 abgesperrt. Das Versperrorgan 26 ist so ausgebildet, das es je nach auftretenden Druckverhältnis, d.h. je nach Fahrtrichtung des Zuges entweder das Rohr 24 oder das Rohr 22 absperrt, also jeweils das Rohr absperrt, das von der Strömung abgewandt ist. In der Ausführungsvariante gemäß Figur 16 ist das Absperrorgan 26 als Kugel ausgebildet, die innerhalb einer rundum laufenden Ausnehmung 28 derart beweglich ist, dass sie jeweils das Rohr 24 bzw. das Rohr 22 absperren kann. In der Figur 17 sind als Absperrorgan zwei Membranen 26' vorgesehen, die aufgrund ihrer Eigenfederkraft bei Stillstand des Zuges das Rohr 24 bzw. 22 verschließen und bei Auftreten eines strömungsbedingten Drucks zur Freigabe des Rohres 22 bzw. 24 ausgelenkt werden. Eine weitere alternative Ausgestaltung des Versperrorgans ergibt sich aus Figur 18, in welcher eine lose Membran 26" vorgesehen ist, die je nach Druckverhältnis das Rohr 22 bzw. das Rohr 24 verschließt. Der restliche Aufbau des Pitotrohres ist konventionell, so dass an dieser Stelle auf eine ausführliche Beschreibung verzichtet werden kann.

Diese anhand der Figuren 16 bis 18 dargestellten Pitotrohre sind in den Figuren 19 bis 21 dadurch modifiziert, dass die Pitotrohre 20 innerhalb einer zu beiden Seiten hin symmetrisch aufgebauten Lavaldüse 30 angeordnet sind, wobei die Bohrungen 32 zur Bestimmung des statischen Drucks in der Lavaldüse vorgesehen sind und über eine Ringkanal 34 zur Bestimmung des statischen Drucks in der beispielhaft in Figur 19 dargestellten Art und Weise in ein Behältnis 36 geleitet werden, so dass in üblicher Weise der statische Druck vom gemessenen Totaldruck abgezogen werden kann, um in bekannter Art und Weise die Geschwindigkeit nach Ermittlung des kinetischen Drucks zu bestimmen. Die Ausführungsvarianten gemäß der Figuren 19 bis 21 unterscheiden sich lediglich in der Ausgestaltung des Versperrorgans, wie sie bereits anhand der Figuren 16 bis 18 erläutert wurden.

Anhand der Ausführungsvariante, die in den Figuren 6 bis 9 dargestellt ist, wird ein Verfahren zur Echtzeitmessung der Wagendichtigkeit im Betrieb erläutert. Mit diesem Verfahren wird die dynamische Wagendichtigkeit berechnet. Die exakte Leckage eines Wagens bzw. dessen Dichtigkeit werden durch folgende Differentialgleichung ermittelt:

$$\frac{\partial}{\partial t}p(s) + V\frac{\partial}{\partial s}p(s) = \frac{RT(s)}{V(\partial s)}[m_{Leckage}\,(s,\,\Delta p) + m_{Aussenluft}\,(s,\,\Delta p) + m_{Fortluft}\,(s,\,\Delta p)],$$

wobei die Parameter folgendes bedeuten:

p = Druck

t = Zeit

s = Wegstrecke

v = Geschwindigkeit

R = Gaskonstante

T = Temperatur

V = Volumen

$m$ = Massenstrom

Für dieses Verfahren ist es also notwendig, dass die Steuergrößen, wie beispielsweise die Druckschutzventilsteuerung oder Lüfterdrehzahl bekannt sind und der Innendruck messbar ist. Hier werden die Daten nicht nur für den zu betrachtenden Wagen sondern auch für die Nachbarwagen berücksichtigt.

Die anhand der Figur 7 erläuterten benötigten Apparaturen betreffen zum einen einen Differenzdrucksensor für den Wageninnendruck $\partial_{Pwagen}$, einen großen Referenzbehälter und eine mikroelektronische Druckschutzauswerteeinheit (DSA), die meistens im dezentralen Klimaregler, auch Systemcontroller (SC) genannt, integriert sind. Weiterhin ist ein Massenspeichermedium und ein kumulatives statistisches Auswerteprogramm im Systemcontroller (SC) vorgesehen. Neben den elektrischen Signalleitungen und pneumatischen Verschlauchungen ist auch hier ein Bordkommunikationssystem (BKS) und ein Zugdiagnosesystem (ZDS) vorhanden. Zur Lösung der vollständigen Differentialgleichung sind Werte über eine Funkuhr, ein Satellitennavigationssystem (GPS) oder ein Zuginformationssystem (ZIS) zur Synchronisation der Datenübermittlung über die gesamte Zuglänge notwendig. Ein Bordkommunikationssystem zur Übertragung des Innendrucks aus den Nachbarwagen $p_{Wagen,\,n+1}$ und $p_{Wagen,\,n-1}$ um den lokalen Innendruckgradienten in Wagenlängsrichtung $\partial_{Pwagen}/\partial s$ zu berechnen, ist ebenfalls vorhanden.

Weiterhin ist ein Differenzdrucksensor für den zeitlichen Wageninnendruckgradienten $\partial_{Pwagen}/\partial t$ zur Erhöhung der Rechengeschwindigkeit von Vorteil oder die Berechnung des Innendruckgradienten kann über den zeitlichen Verlauf des Wageninnendrucks erfolgen. Anstelle des großen Referenzbehälters kann bei einem entsprechenden Differenzdrucksensor zur Erhöhung der Rechengeschwindigkeit ein kleiner Referenzbehälter eingesetzt werden. Die Kennlinien der vorhandenen Lüfter oder Ventile, sollen als Funktion der Druckdifferenz falls sie durchgehend Luft fördern bzw. durchlassen im Speicher abgelegt sein, um diese Daten für die Berechnung zur Verfügung zu stellen. Zur Erfassung der Druckdifferenz über Lüfter, Ventile und Leckageöffnungen kann aber auch ein Differenzdrucksensor zwischen Innen- und Außendruck oder ein Differenzdrucksensor für Außendruck gegen die Referenz mit großem Referenzbehälter vorgesehen sein.

Die ganzen Daten können, wie zuvor beschrieben, innerhalb des Zuges verarbeitet werden. Es ist aber auch möglich, über eine Datenfernübertragung die Daten an einen bordexternen Rechner zu übertragen und dort zu verarbeiten.

Die aufgenommenen Daten können, wie anhand der Figur 8 dargestellt, zunächst exakt ausgewertet werden. Hier wird ein ähnliches Messprinzip verwendet, wie es schon anhand des einleitenden Standes der Technik erläutert wurde. Hier liegt allerdings der Beobachtungszeitraum nicht mehr im Sekunden- oder Minutenbereich, sondern im Millisekundenbereich.

Zusätzlich wird der aktuelle Außendruck bzw. die Druckdifferenz $\Delta p$ zwischen außen und innen benötigt, um die Durchsätze der Leckage, der Druckschutzlüfter und der Ventile zu berechnen.

Die Innendrücke der Nachbarwagen $\partial_{Pwagen,\,n-1}$ und $\partial_{Pwagen,\,n+1}$ werden benötigt, um den Druckgradienten in Wagenlängsrichtung mit zu berücksichtigen entsprechend der folgenden Gleichung:

$$\frac{\partial}{\partial s}p(s) = \frac{P_{Wagen,\,n+1} - P_{Wagen,\,n-1}}{2\Delta s},$$

wobei $\Delta s$ der Abstand zwischen zwei Sensoren ist.

Da die Datenübertragung meistens nicht in Echtzeit erfolgt, müssen die Daten mit der Zeit, zu der sie gemessen wurden, mit übertragen werden, d.h. dass die Meßstellen untereinander synchronisiert werden müssen - per Funkuhr, Borduhr oder GPS. Aufgrund dieser Methode kann mittels der Differentialgleichung

$$\frac{\partial}{\partial t}p(s) + V\frac{\partial}{\partial s}p(s) = \frac{RT(s)}{V(\partial s)}\,[m_{Leckage}\,(s,\,\Delta p) + m_{Aussenluft}\,(s,\,\Delta p) + m_{Fortluft}\,(s,\,\Delta p)],$$

die Wagendichtigkeit, beispielsweise die äquivalente Öffnungsfläche oder der $\tau$-Wert berechnet werden.

Analysiert wird jedoch ein Mittelwert der Wagendichtigkeit aufgrund der Meßstreuung der vielen Parameter.

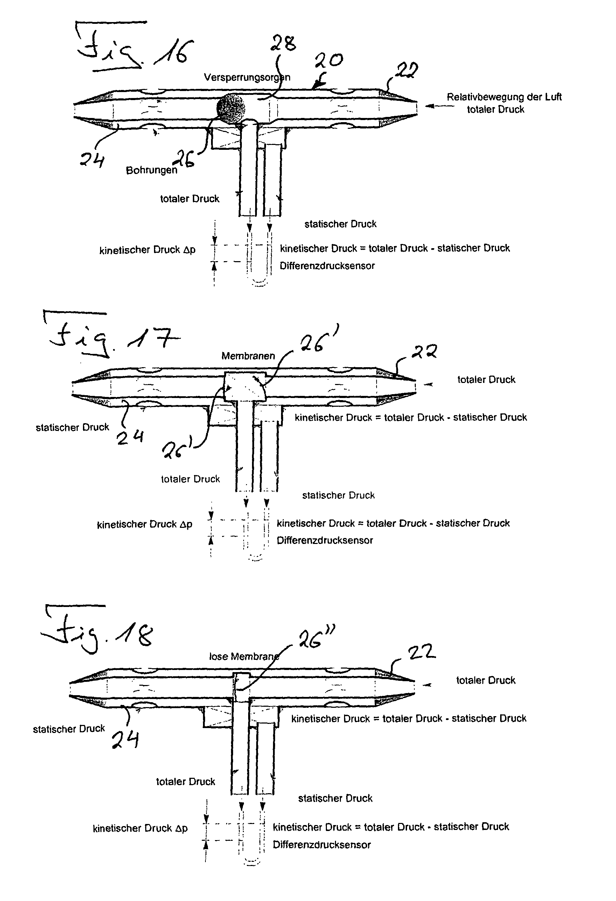

Alternativ zu der zuvor beschriebenen exakten Auswertung kann auch eine Schnellauswertung erfolgen, die anhand der Figur 9 erläutert wird. Der $\tau$-Wert wird hier direkt über einen exponentiellen Ansatz, der eine Näherungslösung für die zuvor wiedergegebene Differentialgleichung darstellt, des Innendruckverlaufs bestimmt. Dieser Ansatz lautet:

$$\tau = -\frac{\Delta t}{\ln\frac{\Delta p(t - \Delta t)}{\Delta p(t)}}$$

Diese Schnellauswertung kann zur Ermittlung des $\tau$ auch ohne Kenntnis der Druckdifferenz zwischen außen und innen, des Zustands des Nachbarwagens und der Zeit und sonstiger schwer zu ermittelnder Größen verwendet werden.

Falls zusätzlich unterschieden wird zwischen Sequenzen mit offenen und geschlossenen Druckschutzventilen (DSV), kann sogar der relative Anteil der Druckschutzventile in der gesamten Wagenleckage durch einen empirischen Differenzansatz ermittelt werden.

Das hier beschriebene exakte Verfahren gemäß der dritten Ausführungsvariante der Erfindung eignet sich hauptsächlich zur Ermittlung der Wagendichtigkeit und der Lokalisierung der Leckagestellen. Vorteilhaft ist nur ein vergleichsweise geringer Messaufwand durch zeitliches Messen des Innendruckverlaufs notwendig. Die exakte dynamische Wagendichtigkeit ist ermittelbar. Zu einer quantitativen Aussage der Wagendichtigkeit sind nicht unbedingt Kalibrierungsmessungen notwendig.

Mittels des Verfahrens kann die Lokalisierung der Leckagen über den Zug durch Berücksichtigung des örtlichen Druckgradienten $\partial_{P_{Wagen}}/\partial s$ über die Zuglängsachse berücksichtigt werden. Damit kann auch die Luftsäulenbewegung berücksichtigt werden. Die besondere Leckage der Druckschließventile kann bestimmt werden. Schließlich bleibt auch bei dieser Ausführungsvariante der Wagen im Fahrgastbetrieb, er muss also nicht aus dem Zugverband herausgenommen werden und stationär der Messung zugeführt werden.

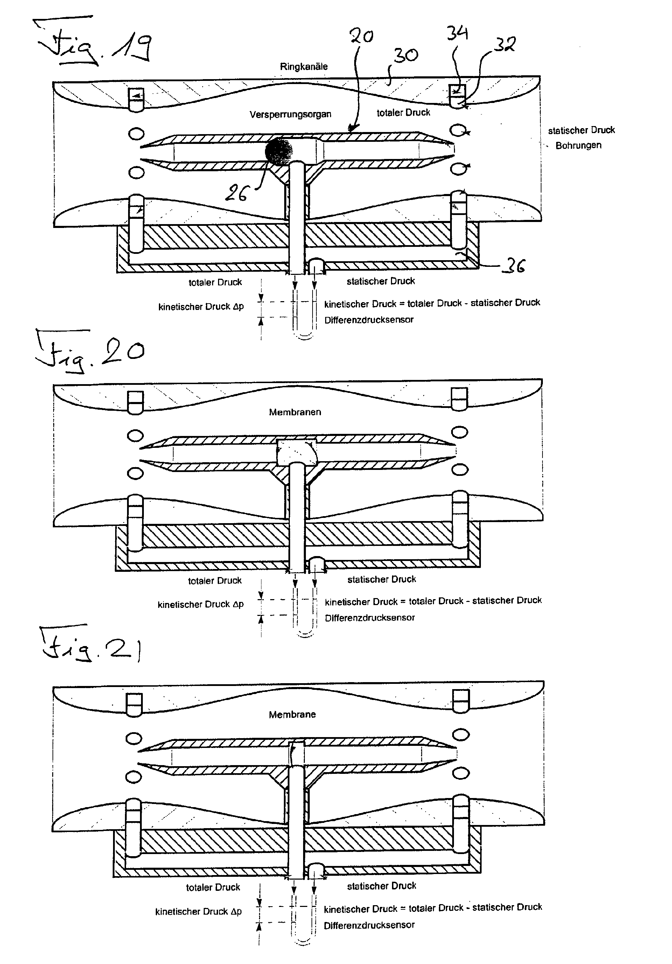

Eine vierte Ausführungsvariante eines Dichtigkeitsmessverfahrens betrifft ein Dichtigkeitsmessverfahren außerhalb des Fahrgastbetriebs. Dieses wird anhand der Figuren 10 bis 15 näher erläutert. Es wird zwar der Zug im Stillstand untersucht, so dass dieser anders als in den anderen Verfahrensvarianten während des Messens nicht für den Fahrgastbetrieb zur Verfügung steht. Bei dem hier vorliegenden Messverfahren wird allerdings vorteilhaft eine Aussage über die Dichtigkeit des gesamten Zuges erfolgen. Die Prüfung kann beispielsweise nachts nach den üblichen Reinigungsarbeiten auf dem Abstellgleis erfolgen, ohne dass der Zug also dem Betrieb insgesamt entzogen werden kann. Wie in den Figuren 10 und 11 dargestellt, werden alle Wagen nach außen abgeschottet, wobei hier die Türen und Druckschutzventile (DSV) entsprechend angesteuert werden.

Falls Druckschutzlüfter (DSL) vorhanden sind, wird nur Außenluft eingeblasen, was in der Figur 11 durch den entsprechenden Pfeil dargestellt ist oder nur Fortluft ausgesaugt, was in der Figur 10 durch den Pfeil dargestellt ist, um eine möglichst große Druckdifferenz zwischen innen und außen zu erzeugen.

Alternativ bieten sich auch die Fortlüfter alleine an, wenn die Fortluftdruckschutzventile (DSV) separat ansteuerbar sind und offen bleiben. Dies eignet sich gerade dann, wenn keine Druckschutzlüfter (DSL) zu Verfügung stehen.

Wird ein stationärer Zustand erreicht, kann direkt auf die Wagenleckage geschlossen werden. Zur Berechnung der Wagenleckage eignet sich die anhand der dritten Verfahrensvariante erläuterte Differentialgleichung oder die entsprechende Wertzeitmessung zur schnellen Auswertung.

Bei der Halbwertzeitmessung werden alle Druckschutzventile geschlossen, die Druckschutzlüfter dürfen keine Luft mehr hinein oder heraus fördern - oder exakt die gleiche Menge hinein und hinaus fördern - beispielsweise Kolbenmaschinen oder Rootsgebläse. Die Zeit wird zum Erreichen einer sinnvollen Druckdifferenz von innen nach außen gemessen. Der τ-Wert errechnet sich dann auch wieder aus folgender Gleichung:

$$\tau = -\frac{\Delta t}{\ln \dfrac{\Delta p(t - \Delta t)}{\Delta p(t)}}$$

Anhand der Figur 12 können die für die Durchführung dieses Messverfahrens benötigten Apparaturen erläutert werden. Um eine voll automatische Messung zu ermöglichen, sind vom Systemcontroller (SC) Ansteuereinheiten für die verschiedenen Druckschließventile und nach außen kommunizierenden Lüfter vorhanden. Die Ansteuerung der Türen kann beispielsweise über das Bordkommunikationssystem (BKS) erfolgen. Eine mikroelektronische Druckschutzauswerteeinheit (DSA) ist im hier dargestellten Ausführungsbeispiel im dezentralen Klimaregler, d.h. Systemcontroller (SC) integriert. Übliche elektrische Signalleitungen und pneumatische Verschlauchungen sind genauso vorhanden wie das Bordkommunikationssystem (BKS) und ein Zugdiagnosesystem (ZDS).

Zur Erfassung des Innendruckverlaufs können Differenzdrucksensoren zwischen Innen- und Außendruck oder aber Differenzdrucksensoren für den Wageninnendruck $\partial_{\text{Pwagen}}$ mit einem großen Referenzbehälter vorhanden sein. Es können die aufgenommenen Daten auch über eine Datenfernübertragung (DFÜ) an einen bordexternen Rechner zur Auswertung übertragen werden. Auch bei diesem System lassen sich die Leckagen in Zuglängsrichtung lokalisieren. Dies geschieht analog, wie anhand der dritten Ausführungsvariante für das Messverfahren erläutert.

Anhand der Figuren 13 und 14 wird die Auswertung des Messverfahrens erläutert. Das Verfahren funktioniert am einfachsten, wenn man den vollständigen Zug abschottet - zum Beispiel geschlossene Druckschutzventile und Türen - und mit den an Bord befindlichen Lüftern - zum Beispiel Druckschutzlüfter (DSL), Außenlüfter (AuLL), Fortluftlüfter (FoLL) oder Zuluftlüfter (ZuLL) mit geschlossenen Umluftklappen (UmLK) und offenen Außenluftdruckschutzventilen (DSVAuL) - jeden Wagen gleichzeitig aussaugt oder aufbläst.

Es muss jedoch der Zugang des Lüfters zur Umgebung gewährleistet werden, in dem das entsprechende Druckschutzventil offen und der entsprechende Druckschutzlüfter aktiv gehalten wird.

Der Wagen mit dem niedrigsten Unter-bzw. Überdruck bedarf am allernotwendigsten einer Instandhaltung. Auch der Mittelwert des gesamten Zuges kann darüber Auskunft geben, ob und wann der Zug dem Fahrgastbetrieb entzogen werden muss um Nachbesserungen der Dichtigkeit durchführen zu können. Durch die Berücksichtigung der Wagenlängsströmung, wie sie zuvor beschrieben wurde, kann sogar noch die genaue Position der Undichtigkeitsstellen ermittelt werden.

Ist der Zug erst auf einem Über- oder Unterdruck gebracht worden, werden nachträglich die letzten Öffnungen zur Umgebung geschlossen und die Lüfter können - müssen aber nicht - wie nach Bahnvorschrift weiter betrieben werden.

Anschließend wird die Zeitspanne, in der der jeweilige Wageninnendruck einen festen Schwellenwert erreicht, gemessen.

Somit ergibt sich über die Halbwertzeitformel, die zuvor wiedergegeben wurde, für jeden Wagen ein τ-Wert der Wagendichtigkeit. Über die vollständige Differentialgleichung oder einen empirischen Ansatz kann noch die Wagenlängsströmung mit berücksichtigt werden.

Durch sinnvolle Kombinationen der einzelnen Schaltmöglichkeiten der Klimagerätekomponenten kann auch der Zustand der einzelnen Komponenten - zum Beispiel Funktion der verschiedenen Lüfter oder Dichtigkeit und Funktion der Druckschutzventile - ermittelt werden.

Insgesamt kommt das hier vorgestellte Messverfahren einer Referenzmessung sehr nahe.

**Patentansprüche**

1. Verfahren zur Dichtigkeitsmessung von Wagen, insbesondere Zugwagen, im Betrieb,
   **dadurch gekennzeichnet,**
   **dass** im Wagen der Innendruckgradient $\partial_{\text{Pwagen}}/\partial t$ gebildet wird, dass Grenzwerte des Innendruckgradienten bestimmt und in dem Speicher einer Auswerteeinheit abgelegt werden, dass der während des Betriebs des Wagens gemessene Innendruckgradient mit im Speicher der Auswerteeinheit abgelegten Grenzwerten verglichen wird, dass über die Zeit ermittelt wird, wie häufig der gemessene Innendruckgradient die festgelegten Grenzwerte überschreitet und dass aus der Häufigkeit der Grenzwertüberschreitung die Wagendichtigkeit ermittelt wird.

2. Verfahren zur Dichtigkeitsmessung von Wagen, insbesondere Zugwagen im Betrieb, in denen zumindest ein Druckschutzventil integriert ist,
**dadurch gekennzeichnet,**
**dass** die Schließfrequenz der Druckschutzventile in Abhängigkeit von der durch den Wagen befahrenen Strecke und der Geschwindigkeit gemessen wird und mit in einem Speicher einer Auswerteeinheit abgelegten für den dichten Wagen aufgenommenen Referenzwerten verglichen wird und dass bei Feststellung einer erhöhten Schließfrequenz der Druckschutzventile gegenüber dem zugehörigen gespeicherten Referenzwert festgestellt wird, dass der Wagen undicht ist.

3. Verfahren nach Anspruch 1 oder 2, **dadurch gekennzeichnet, dass** die Auswertung der Daten in der mikroelektronischen Druckschutzauswerteeinheit erfolgt, die innerhalb des Wagens angeordnet ist.

4. Verfahren nach Anspruch 1 oder 2, **dadurch gekennzeichnet, dass** die innerhalb des Wagens aufgenommenen Daten über eine Datenfernübertragung an einen bordexternen Rechner übertragen und dort verarbeitet werden.

5. Verfahren nach einem der Ansprüche 1 bis 4, **dadurch gekennzeichnet, dass** die Ermittlung der Fahrgeschwindigkeit des Wagens über mindestens eine an der Wagenaußenhaut angeordnete zweiseitige Pitotsonde erfolgt.

6. Verfahren nach einem der Ansprüche 1 bis 5, **dadurch gekennzeichnet, dass** die Ermittlung der Strecke des Wagens über ein Zuginformationssystem mit Uhrfunktion oder ein Satellitennavigationssystem erfolgt.

7. Vorrichtung zur Durchführung eines Verfahrens nach einem der Ansprüche 1 bis 6, **gekennzeichnet durch** einen Differenzdrucksensor für den Wageninnendruck gegenüber einem Referenzwert, einem großen Referenzbehälter, oder einem Differenzdrucksensor mit einem kleinen Referenzbehälter um den Druckgradienten $\partial_{Pwagen}/\partial t$ direkt zu messen.

8. Vorrichtung zur Durchführung eines Verfahrens nach einem der Ansprüche 1 bis 6, **dadurch gekennzeichnet, dass** die Druckschutzventile Endschalter zum Zählen der Schließzyklen aufweisen.

9. Vorrichtung zur Durchführung eines Verfahrens nach einem der Ansprüche 1 bis 6, **dadurch gekennzeichnet, dass** zur Messung der Fahrgeschwindigkeit an der Wagenaußenhaut eine zweiseitige Pitotsonde angeordnet ist, deren eine Seite jeweils über ein Versperrorgan, beispielsweise eine Kugel oder Membran, verschließbar ist.

10. Verfahren zur Dichtigkeitsmessung von Wagen, insbesondere Zugwagen in einem Zug, in einem Wagenverbund.
**dadurch gekennzeichnet,**
**dass** der Innendruck bzw. Außendruck über mehrere synchronisierte Meßstellen in Längsrichtung des Wagenverbunds verteilt erfolgt, dass die Messwerte an eine Auswerteeinheit weitergegeben werden und dass über die Auswerteeinheit der örtliche Druckgradient über die Längsrichtung des Wagenverbundes im Inneren des Wagenverbundes und/oder außerhalb desselben berechnet wird.

11. Verfahren nach Anspruch 10, **dadurch gekennzeichnet, dass** die exakte Leckage eines Wagens bzw. dessen Dichtigkeit durch folgende Differentialgleichung ermittelt wird:

$$\frac{\partial}{\partial t}p(s) + v\frac{\partial}{\partial s}p(s) = \frac{RT(s)}{V(\partial s)}[m_{Leckage}\,(s,\,\Delta p) + m_{Aussenluft}\,(s,\,\Delta p) + m_{Fortluft}\,(s,\,\Delta p)],$$

wobei die Parameter folgendes bedeuten:

p = Druck

t = Zeit

s = Wegstrecke

v = Geschwindigkeit

R = Gaskonstante

T = Temperatur

V = Volumen

$m$ = Massenstrom

**12.** Verfahren nach Anspruch 10, **dadurch gekennzeichnet, dass** Leckagen über die Länge des Wagenverbundes, einschließlich der Druckschutzventilleckagen ermittelt werden.

**13.** Verfahren nach Anspruch 10 oder Anpruch 11, **dadurch gekennzeichnet, dass** durch eine Funkuhr, ein Satellitennavigationssystem oder ein Zuginformationssystem die Datenübermittlung der über die gesamte Länge der miteinander verbundenen Wagen aufgenommenen Messwerte synchronisiert wird.

**14.** Vorrichtung zur Durchführung eines Verfahrens nach einem der Ansprüche 11 bis 13, **dadurch gekennzeichnet, dass** über ein Bordkommunikationssystem an einen ausgewählten Wagen der Innendruck aus dessen Nachbarwagen übertragen wird, um den lokalen Innendruckgradienten in Wagenlängsrichtung $\partial_{\text{Pwagen}}/\partial s$ zu berechnen.

**15.** Verfahren zur Dichtigkeitsmessung von in einem Wagenverbund zusammenhängenden Wagen, insbesondere Zugwagen in einem Zug, bei Stillstand,
**dadurch gekennzeichnet,**
**dass** alle Wagen nach außen abgeschottet sind, dass entweder nur Außenluft eingeblasen oder nur Fortluft ausgesaugt wird, um eine größtmögliche Druckdifferenz zwischen dem Wageninneren und der Außenumgebung zu erzeugen, dass der Druckverlauf gemessen wird und Bestimmung der Zeit, in welcher eine vorgegebene Druckdifferenz erreicht wird.

**16.** Verfahren nach Anspruch 14, **dadurch gekennzeichnet, dass** die Längsleckage eines einzelnen Wagens berücksichtigt wird und gegebenenfalls die Lüfterund Ventilkennlinien bei der Auswertung berücksichtigt werden.

Fig.1

St. d.T.

$p_{Wagen}$ - $p_{Umg}$

10

12

Fig.2

St. d.T.

3600 Pa

$p_{Wagen}$ - $p_{Umg}$

1350 Pa

$\tau$-Wert = $\Delta t$

Fig.3

Optionale Übermittelung
der Daten zur Diagnose

Bordextern (DFÜ)

Bordintern (BKS)

Alternativ: DSV Signal

$\partial p_{Wagen} / \partial t$

10

Fig. 4

Ansteuerung DSV

**Schließsignal** — DSV — Schließsignal — SC

Strecke

Option 2
nur quantitativ

**Alternativen 1** · PWagen — Sensor — PWagen — SC — Geschw.

ZIS,
GPS,
Pitot-Sonde,
Mustererkennung

**Alternativen 2**

ZDS — **Warnmeldung und Fehlermeldung**

$\partial P_{Wagen}/\partial t$ — Sensor — $\partial P_{Wagen}/\partial t$ — SC

Warnmeldung

DFÜ

BKS

Häufigkeiten

Rechner

**Option 1**

Häufigkeiten

Speicher
Bordintern

Speicher
Bordextern

Fig. 5

Häufigkeit mit der, der Innendruckgradient die Marke 95%
von 800 Pa/1s überschreitet ohne 0(±Toleranz) zu sein

Kritische Häufigkeit

100

Anzahl der
Ereignisse

Zeit

72h|

Warnmeldung

Warnmeldung wird best:
Fehlermeldung!

Fig. 6

DSL AuL DSV AuL AuLL

AuLL DSV AuL DSL AuL

*Fig. 7*

*Fig. 8*

Fig. 9

$p_{Umg}$

$p_{Wagen}$

$p(t+\Delta t) = p(t) \cdot e^{-1/\tau_{gesamt} \cdot \Delta t}$
für DSV-geschlossen

$p(t+\Delta t) = p(t) \cdot e^{-1/\tau_{ohne\,DSV} \cdot \Delta t}$
für DSV-offen

Zu
Auf

DSV-Signal

Fig. 10

a)

10

$p_{Wagen}$ - $p_{Umg}$

Fig. 11

10

$p_{Wagen}$ - $p_{Umg}$

Fig. 12

**Kombinationen 1**

**Alternative 1**

Ansteuerung Türen

| Türen |

Ansteuerung Lüfter

| AuLL |

Ansteuerung Lüfter

| FoLL |

Ansteuerung Lüfter

| DSL |

Ansteuerung DSV

| DSV |

$p_{Wagen}$ | Sensor | → | SC |

$p_{Umg} - p_{Wagen}$ | Sensor |

→ ZDS

DFÜ

**Option 1**

| Rechner |

**Option 2**

Fig. 13

niedrige Leckage

hohe Leckage

$p_{Wagen} - p_{Umg}$

Wagen 1 — Wagen n — Zuglänge

Fig. 14

x Pa

$p_{Wagen} - p_{Umg}$

y Pa

τ-Wert = Δt
Lokal für ein Wagen

14

Fig. 15

**fig. 16**

Versperrungsorgan
28 20 22
Relativbewegung der Luft
totaler Druck
24 26
Bohrungen
totaler Druck
statischer Druck
kinetischer Druck Δp
kinetischer Druck = totaler Druck - statischer Druck
Differenzdrucksensor

**fig. 17**

Membranen 26' 22
totaler Druck
statischer Druck 24 26'
kinetischer Druck = totaler Druck - statischer Druck
totaler Druck
statischer Druck
kinetischer Druck Δp
kinetischer Druck = totaler Druck - statischer Druck
Differenzdrucksensor

**fig. 18**

lose Membran 26'' 22
totaler Druck
statischer Druck 24
kinetischer Druck = totaler Druck - statischer Druck
totaler Druck
statischer Druck
kinetischer Druck Δp
kinetischer Druck = totaler Druck - statischer Druck
Differenzdrucksensor

Fig. 19

Ringkanäle

20  30  34  32

Versperrungsorgan

totaler Druck

statischer Druck
Bohrungen

26

26

totaler Druck

statischer Druck

kinetischer Druck Δp

kinetischer Druck = totaler Druck - statischer Druck
Differenzdrucksensor

Fig. 20

Membranen

totaler Druck

statischer Druck

kinetischer Druck Δp

kinetischer Druck = totaler Druck - statischer Druck
Differenzdrucksensor

Fig. 21

Membrane

totaler Druck

statischer Druck

kinetischer Druck Δp

kinetischer Druck = totaler Druck - statischer Druck
Differenzdrucksensor